# EUROPÄISCHE PATENTANMELDUNG

(11) **EP 4 385 832 A1**
(43) Veröffentlichungstag der Anmeldung: **19.06.2024**
(21) Anmeldenummer: 23215638.0
(22) Anmeldetag: 11.12.2023
(51) Int. Cl.: B60R 21/0132, B60R 21/0136

(54) **VERFAHREN UND VORRICHTUNG ZUM ERKENNEN EINER KOLLISION EINES KRAFTRADS MIT EINEM STARREN OBJEKT**

(30) Priorität: 14.12.2022 DE 102022213667
(71) Anmelder: Robert Bosch GmbH, 70442 Stuttgart (DE)
(72) Erfinder: Klews, Matthias, 72076 Tuebingen (DE)

(57) **Zusammenfassung**

Verfahren (100) zum Erkennen einer Kollision eines Kraftrads (1) mit einem starren Objekt (2), wobei eine Kollision in Abhängigkeit von einem Geschwindigkeitsgradienten eines Vorderrades (11) des Kraftrads (1)und einer Beschleunigung des Kraftrads (1) erkannt wird.

## Beschreibung

Die vorliegende Erfindung betrifft in einem ersten Aspekt ein Verfahren zum Erkennen einer Kollision eines Kraftrads mit einem starren Objekt. In weiteren Aspekten betrifft die vorliegende Erfindung ein entsprechendes Computerprogramm, maschinenlesbares Speichermedium sowie eine entsprechende Vorrichtung.

### Stand der Technik

Aus der DE 10 2017 205 063 A1 ein Verfahren zur Überwachung eines Kraftrads bekannt. Das Verfahren umfasst die Schritte: Erfassen und Auswerten von beschleunigungsrelevanten Informationen des Kraftrads, wobei basierend auf den beschleunigungsrelevanten Informationen bzw. daraus ermittelten Größen eine Fahrzeugbewegung und eine Fahrzeuglage im dreidimensionalen Raum geschätzt werden, wobei die aktuell geschätzte Fahrzeuglage im Raum ausgewertet und als normaler oder kritischer Fahrzustand bewertet wird

### Offenbarung der Erfindung

Vor diesem Hintergrund schafft die vorliegende Erfindung ein Verfahren und eine Vorrichtung zum Erkennen einer Kollision eines Kraftrads mit einem starren Objekt sowie ein entsprechendes Computerprogramm und maschinenlesbares Speichermedium.

Die Erfindung basiert auf der Erkenntnis, dass die Geschwindigkeitsgradienten eines Vorderrads eines Kraftrads und die Verläufe von Beschleunigungen eines Kraftrads mit entsprechenden Sensorsystemen, die an dem Vorderrad des Kraftrads bzw. an entsprechender Stelle an dem Kraftrad angeordnet sind, fortlaufend erfasst und ausgewertet werden können.

Erfindungsgemäß wird eine Kollision eines Kraftrads mit einem starren Objekt in Abhängigkeit von einem Geschwindigkeitsgradienten eines Vorderrades des Kraftrads und einer Beschleunigung des Kraftrads erkannt.

Unter dem Kraftrad kann vorliegend ein Zweirad mit einem Antrieb verstanden werden. Hierbei kann der Antrieb ein Verbrennungsmotor oder eine Elektromotor oder eine Kombination aus Verbrennungsmotor und Elektromotor sein. Zudem können Ausführungsformen der Erfindung auch für Elektrofahrräder oder Pedelecs eingesetzt werden.

Unter einem Sensorsystem kann vorliegend eine Vorrichtung oder ein Teil einer Vorrichtung oder ein System aus Vorrichtungen verstanden werden, die Sensorelemente aufweisen, welche dazu geeignete sind physikalische Effekte, wie bspw. Beschleunigungen in die Raumrichtungen oder Drehraten auf das Kraftrad zu erfassen und in geeigneter Form an eine bzw. einer Schnittstelle als Sensorsignal auszugeben. Bei einem solchen Sensorsystem kann es sich um einen Sensorsystem umfassend Inertialsensoriken handeln.

Ferner kann unter dem Sensorsystem oder Teil des Sensorsystems eine Vorrichtung oder ein System aus Vorrichtungen verstanden werden, die Sensorelement aufweisen, welche dazu eingerichtet sind Bewegungen, Beschleunigungen oder Beschleunigungsverläufe, wie bspw. Beschleunigungsgradienten eines Rads, insbesondere eines Vorderrads, des Kraftrads zu erfassen und in geeigneter Form an eine bzw. einer Schnittstelle als Sensorsignal auszugeben.

Unter einem starren Objekt kann vorliegend ein Objekt verstanden werden, welches eine Beschaffenheit aufweist, die dazu geeignet ist, bei Kollision, d.h. bei einem Zusammentreffen mit einem Kraftrad einerseits auf das Kraftrad außerordentlich starke Beschleunigungen auszuüben und andererseits Schäden an dem Kraftrad zu verursachen. Ein derartige Kollision zwischen einem Kraftrad und einem solchen starren Objekt ist dabei typischerweise mit enormen Verletzungsgefahren für den oder die Aufsassen auf dem Kraftrad verbunden.

Ziel der vorliegenden Erfindung ist es eine solche Kollision frühzeitig und sicher zu erkennen, um Maßnahmen einzuleiten, die dazu geeignet sind mögliche Verletzungsgefahren für den oder die Aufsassen auf das Kraftrad zu verhindern oder zumindest zu mindern.

Die vorliegenden Erfindung ist zudem dazu geeignet Kollisionen eines Kraftrads mit einem starren Objekt zu erkennen, auch wenn das Kraftrad in Folge einer solchen Kollision nicht eine unfalltypischen Endlage, d.h. auf der Seite liegend, einnimmt.

Nach einer Ausführungsform des Verfahrens gemäß der vorliegenden Erfindung wird die Kollision nach Überschreiten eines ersten Schwellenwerts für die Beschleunigung durch die Beschleunigung des Kraftrads in Abhängigkeit von dem Geschwindigkeitsgradienten des Vorderrads des Kraftrads erkannt.

Diese Ausführungsform der Erfindung basiert auf der Erkenntnis, dass die Wertebereiche von Sensorsystemen, die für die Erfassung der Fahrdynamik des Kraftrads eingerichtet sind, im Falle einer Kollision überschritten werden. In einem solchen Fall kommt es zu einem sog. Clipping. D.h. das Sensorsystem gibt entweder einen ungültigen oder den höchsten bzw. niedrigsten Wert des Wertebereichs aus. Kommt es zu einer solchen Situation kann eine Kollision sicher und zuverlässig in Abhängigkeit von dem Geschwindigkeitsgradienten des Vorderrads des Kraftrads erkannt werden.

Nach einer Ausführungsform des Verfahrens der vorliegenden Erfindung wird die Kollision erkannt, wenn der Geschwindigkeitsgradient einen zweiten Schwellenwert für den Geschwindigkeitsgradienten des Vorderrads (11) des Kraftrads (1)überschreitet.

Diese Ausführungsform basiert auf der Erkenntnis, dass im Falle einer Kollision mit einem starren Objekt neben den Wertebereich des Sensorsystems für die Fahrdynamik des Kraftrads überschreitenden Beschleunigungen des Kraftrads hohe, mithin einen Schwellenwert für den Geschwindigkeitsgradienten des Vorderrads überschreitende, Geschwindigkeitsgradienten des Vorderrads des Kraftrads auftreten werden.

Eine solche Kollision kann demnach auf sicher Art und Weise erkannt werden, wenn nach dem Einsetzen eines Clippings bei der Beschleunigung des Kraftrads der Geschwindigkeitsgradient des Vorderrads des Kraftrads einen Schwellenwert für das Vorderrad des Kraftrads überschreitet.

Ein weiterer Aspekt der vorliegenden Erfindung ist ein Computerprogramm, welches eingerichtet ist, alle Schritte eines Verfahrens gemäß der vorliegenden Erfindung auszuführen
Ein weiterer Aspekt der vorliegenden Erfindung ist ein maschinenlesbares Speichermedium, auf dem ein Computerprogramm gemäß der vorliegenden gespeichert ist.

Ein weiterer Aspekt der vorliegenden Erfindung ist eine Vorrichtung eine erste Schnittstelle für den Empfang eines Geschwindigkeitsgradienten eines Vorderrads eines Kraftrads und einer zweiten Schnittstelle für eine Beschleunigung des Kraftrads. Die Vorrichtung ist derart eingerichtet, alle Schritte eines Verfahrens gemäß der vorliegenden Erfindung auszuführen.

Nachfolgend werden Ausführungsformen der vorliegenden Erfindung anhand von Zeichnungen näher erläutert.

Es zeigen:
Fig. 1 ein Ablaufdiagramm einer Ausführungsform des Verfahrens der vorliegenden Erfindung;
Fig. 2 ein Kraftrad umfassend eine Vorrichtung gemäß der vorliegenden Erfindung.

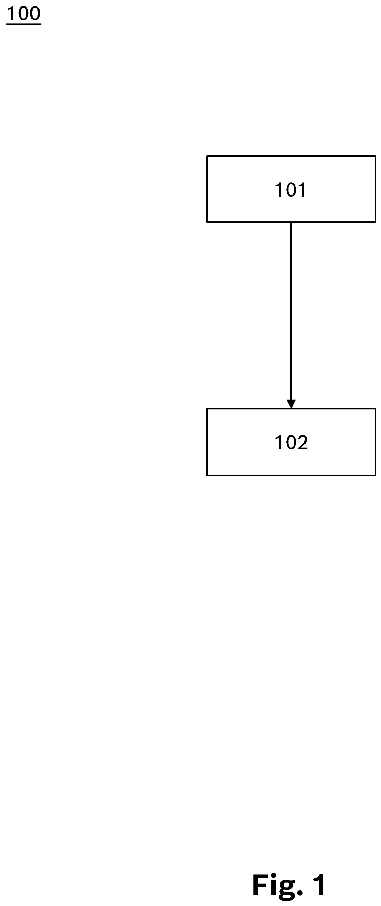

Figur 1 zeigt ein Ablaufdiagramm einer Ausführungsform des Verfahrens 100 der vorliegenden Erfindung.

In Schritt 101 wird eine Beschleunigung des Kraftrads erfasst, die einen Wert außerhalb des Wertebereichs für die Beschleunigungen des Kraftrads anzeigt. Diese Anzeige kann durch die Überschreitung der Beschleunigung eines entsprechenden Schwellenwerts für die Beschleunigung erfolgen. Ferner ist denkbar, dass eine solche Anzeige durch einen entsprechenden Wert erfolgt, der eine derartige Überschreitung anzeigt, bspw. ein ungültiger Wert. Denkbar ist ebenso, dass der höchste bzw. niedrigste anzeigbare Wert für die Beschleunigung erfasst wird.

In Schritt 102 wird in Abhängigkeit von einem Geschwindigkeitsgradienten des Vorderrads des Kraftrads das Vorliegen einer Kollision erkannt. Dies kann bspw. durch das Überschreiten eines entsprechenden Schwellenwerts für den Geschwindigkeitsgradienten des Vorderrads des Kraftrads durch den Geschwindigkeitsgradienten des Vorderrads des Kraftrads erfolgen.

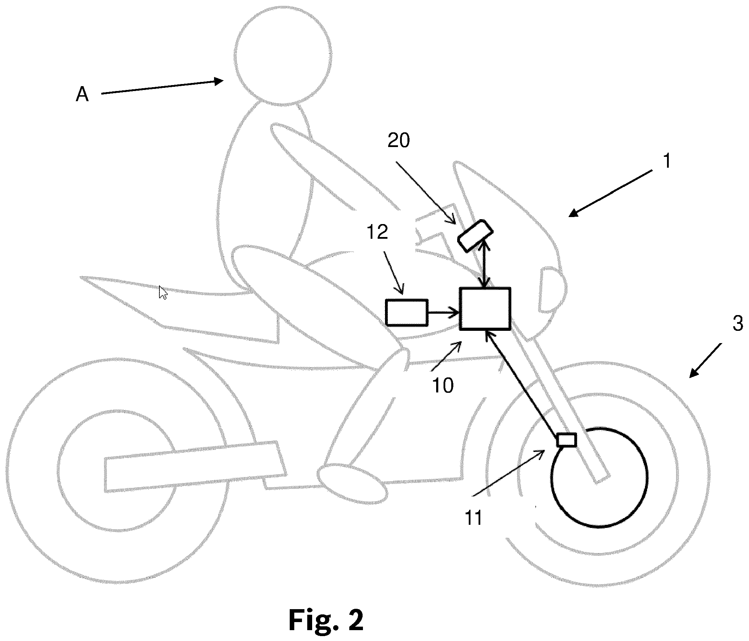

Tritt eine solche Überschreitung auf, so wird eine Kollision des Kraftrads mit einem starren Objekt erkannt. Diese Erkenntnis durch das Verfahren der vorliegenden Erfindung kann entsprechend weitergegeben werden bspw. durch die Ausgabe eines entsprechenden Steuersignals
Figur 2 zeigt ein Kraftrad umfassend eine Vorrichtung gemäß der vorliegenden Erfindung. In der Figur ist dabei ein Sensorsystem zur Erfassung von Beschleunigungen abgebildet sowie ein Sensorsystem zur .Erfassung von Geschwindigkeitsgradienten eines Vorderrads des Kraftrads. Die abgebildete Vorrichtung umfasst eine erste Schnittstelle (101) für den Empfang eines Geschwindigkeitsgradienten eines Vorderrads (3) eines Kraftrads (1) und einer zweiten Schnittstelle (102) für eine Beschleunigung des Kraftrads.

Ferner ist die Vorrichtung das eingerichtet alle Schritte einer Ausführungsform des Verfahrens gemäß der vorliegenden Erfindung auszuführen.

Zudem ist in Fig. 2 abgebildet, dass die Vorrichtung über eine Schnittstelle mit einer Einheit verbunden ist, die in Reaktion auf ein Signal, welches eine Kollision des Kraftrads mit einem starren Objekt anzeigt, geeignete Maßnahmen zur Verhinderung bzw. zumindest zur Minderung einer Verletzungsgefahren für den Auffassen (A) auf dem Kraftrad (1) auszuführen.

Zu solchen Maßnahmen zählen u.a. die Aktivierung eines Rückhaltemittels, wie bspw. eines Airbags, einer Notbremsung durch Ansteuerung des Bremssystems des Kraftrads, einer Absetzung eines Notrufs, eines sog. eCalls zum Herbeirufen von Rettungskräften udgl.

## Patentansprüche

1. Verfahren (100) zum Erkennen einer Kollision eines Kraftrads (1) mit einem starren Objekt (2), wobei eine Kollision in Abhängigkeit von einem Geschwindigkeitsgradienten eines Vorderrades (11) des Kraftrads (1)und einer Beschleunigung des Kraftrads (1) erkannt wird.

2. Verfahren (100) nach Anspruch 1, wobei die Kollision nach Überschreiten eines ersten Schwellenwerts für die Beschleunigung durch die Beschleunigung des Kraftrads (1) in Abhängigkeit von dem Geschwindigkeitsgradienten des Vorderrads (11) des Kraftrads (1) erkannt wird.

3. Verfahren (100) nach Anspruch 2, wobei die Kollision erkannt wird, wenn der Geschwindigkeitsgradient einen zweiten Schwellenwert für den Geschwindigkeitsgradienten des Vorderrads (11) des Kraftrads (1) überschreitet.

4. Computerprogramm, welches eingerichtet ist, alle Schritte eines Verfahrens (100) nach einem der Ansprüche 1 bis 3 auszuführen.

5. Maschinenlesbares Speichermedium, auf dem ein Computerprogramm nach Anspruch 4 gespeichert ist.

6. Vorrichtung (10) umfassend eine erste Schnittstelle (101) für den Empfang eines Geschwindigkeitsgradienten eines Vorderrads (3) eines Kraftrads (1) und einer zweiten Schnittstelle (102) für eine Beschleunigung des Kraftrads (1), welches eingerichtet alle Schritte eines Verfahrens (100) nach einem Ansprüche 1 bis 3 auszuführen.
